# EUROPEAN PATENT APPLICATION

(11) **EP 4 692 295 A1**
(43) Date of publication of application: **11.02.2026**
(21) Application number: 24799920.4
(22) Date of filing: 12.04.2024
(51) Int. Cl.: C12J 1/02, A23L 27/60

(54) **VINEGAR WITH NATURAL SWEETENER AND PRODUCTION METHOD THEREOF**

(30) Priority: 04.05.2023 ES 202330777 U
(71) Applicant: Roig Lorenzo, Ignacio, 43730 Falset Tarragona (ES); Roig Pedrola, Emilio, 43730 Falset Tarragona (ES); Roig Pedrola, Josep, 43730 Falset Tarragona (ES)
(72) Inventor: Roig Lorenzo, Ignacio, 43730 Falset Tarragona (ES); Roig Pedrola, Emilio, 43730 Falset Tarragona (ES); Roig Pedrola, Josep, 43730 Falset Tarragona (ES)
(74) Representative: Torras Toll, Jorge
(86) International application number: PCT/ES2024/070221
(87) International publication number: WO 2024/227963

(57) **Abstract**

Vinegar with natural sweetener, characterized by comprising a mixture of one liter of wine vinegar combined with between 20 and 30 grams of leaves of Stevia Rebaudiana Bertoni, which allows it to develop a product with new characteristic notes in terms of flavor. The method of obtaining the product comprises a first stage of filling barrels by mixing wine vinegar with the Stevia leaves until the barrel is filled to three-quarters of its capacity, with a proportion of between twenty and thirty grams of Stevia per liter of vinegar; a second stage in which a film known as the "mother of vinegar" is formed; and a third stage of emptying the product and refilling with wine or vinegar; all carried out at a constant temperature between 20°C and 40°C.

## Description

### OBJECT OF THE INVENTION

The purpose of the present specification is a vinegar containing a natural sweetener, specifically Stevia Rebaudiana Bertoni, which enables the development of a product having new characteristic notes in its flavor (sweet-and-sour with hints of bitterness, in a proportion highly attractive for use as a food additive), together with the absence of added sugars, providing better nutritional qualities than other vinegar-based dressings or sauces.

The distinctive flavor of the product proposed herein, and its specific taste characteristics, allow it to be used both as a condiment for foods (salads or similar) and as a base for sauces or other culinary applications, whether for domestic use or in restaurants.

### BACKGROUND OF THE INVENTION

Vinegar has been used since time immemorial (its etymology refers to sour wine), obtained by fermentation and as already mentioned, used as a condiment, dressing, or in other applications to impart flavor to meats and/or vegetables (and may also be used as a preservative agent for countless products).

Vinegar is obtained in a second fermentation of the grape, since during the first fermentation the sugars in the grape must are converted into ethanol (resulting in wine), and it is in the second fermentation that oxidation of the ethanol occurs (through the action of a broad group of Acetobacter that combine oxygen with alcohol), ultimately producing vinegar.

### DETAILED DESCRIPTION OF THE INVENTION

The technical problem solved by the present invention is to obtain a vinegar with a new characteristic flavor profile in terms of sweetness, bitterness, and acidity, without added sugars, using natural sweeteners. To achieve this, the vinegar with natural sweetener that is the subject of the present application comprises a mixture of one liter of wine vinegar combined with between twenty and thirty grams of leaves of Stevia Rebaudiana Bertoni.

Owing to its composition, the present invention provides organoleptic qualities that make it novel within the sector of vinegars, dressings, and/or sauces, being based on vinegar obtained through a double fermentation process and enhanced by the inclusion of a portion of Stevia Rebaudiana Bertoni, in the form of green or dried leaves of the plant.

The vinegar proposed herein differs from other products in the same technical field, such as balsamic creams of vinegar that ideally incorporate "Stevia" derived from "Stevioside" and "Rebaudioside," that is, steviol glycosides which are regarded under European legislation as non-natural products (since the extraction process of glycosides renders them non-natural); therefore, it would not be obvious to a person skilled in the art to obtain a vinegar from naturally derived products by including such ingredients, as any expert would be aware of their non-natural origin.

As a result of its distinctive flavor, the vinegar proposed herein may be served as a condiment, as has traditionally been done with salads (the primary use of vinegar since long ago), or alternatively, as a base for new dishes seeking a more characteristic flavor-that is, as a foundation for innovation within the culinary field, a growing technical sector.

In a first practical embodiment, the vinegar is obtained through a process involving the filling of oak barrels (or barrels made of another type of wood) by mixing wine together with the Stevia leaves, or alternatively, mixing vinegar with the Stevia leaves (the intensity of flavor varying depending on the quantity of Stevia leaves), until the barrel is filled to three-quarters of its capacity, using a proportion of between twenty and thirty grams of Stevia per liter of vinegar.

On the surface of the liquid, a film known as the "mother of vinegar" will form, consisting of the bacteria responsible for the acetic fermentation.

Subsequently, the barrel is gradually emptied of the obtained product, while simultaneously refilling the emptied portion with wine or vinegar.

The duration of the process depends largely on the temperature of the liquid; its optimal temperature ranges between 20°C and 40°C, with 30°C being the preferred temperature.

The vinegar may also be produced using more industrialized and well-known methods in the technical field, such as the so-called "German method" and/or the "submerged or Frings method," although the resulting vinegar will display fewer organoleptic nuances.

### PREFERRED EMBODIMENT OF THE INVENTION

The vinegar with natural sweetener proposed herein is characterized by consisting of a mixture of one liter of wine vinegar combined with between twenty and thirty grams of leaves of Stevia Rebaudiana Bertoni during the second stage of vinegar fermentation.

In a first practical embodiment, the Stevia Rebaudiana Bertoni is incorporated into the mixture in the form of green leaves.

In a second practical embodiment, the Stevia Rebaudiana Bertoni is incorporated into the mixture in the form of dried leaves.

The method for obtaining the vinegar with natural sweetener described herein is characterized by comprising a first stage of filling oak barrels (or other equivalent wood) by mixing wine vinegar (or wine) with the Stevia leaves until the barrel is filled to three-quarters of its capacity, using a proportion of between twenty and thirty grams of Stevia per liter of vinegar; a second stage in which a film known as the "mother of vinegar," composed of the bacteria that carry out the acetic fermentation, is formed; and a third stage of emptying the obtained product and refilling with wine or vinegar; all carried out at a constant temperature between 20°C and 40°C, with a preferred temperature of 30°C.

## Claims

1. Vinegar with natural sweetener, **characterized by** comprising a mixture of one liter of wine vinegar combined with between twenty and thirty grams of leaves of Stevia Rebaudiana Bertoni.

2. Vinegar with natural sweetener according to claim 1, wherein the leaves of Stevia Rebaudiana Bertoni are green leaves.

3. Vinegar with natural sweetener according to claim 1, wherein the leaves of Stevia Rebaudiana Bertoni are dried leaves.

4. Method for obtaining the product defined in claims 1 to 3, comprising:
I. a first stage of filling oak barrels (or another equivalent wood) by mixing wine vinegar together with the Stevia leaves until the barrel is filled to three-quarters of its capacity, using a proportion of between twenty and thirty grams of Stevia per liter of vinegar;
II. a second stage in which a film known as the "mother of vinegar" is formed, composed of the bacteria that perform the acetic fermentation; and,
III. a third stage consisting of emptying the product and refilling with wine or vinegar; all carried out at a constant temperature between 20°C and 40°C, with a preferred temperature of 30°C.
